# FASCICULE DE BREVET EUROPEEN

(11) **EP 3 324 799 B1**
(45) Date de publication et mention de la délivrance du brevet: **01.12.2021**
(21) Numéro de dépôt: 16750952.0
(22) Date de dépôt: 12.07.2016
(51) Int. Cl.: A47J 37/06

(54) **PROCÉDÉ DE COMMANDE DU TEMPS DE CUISSON ET APPAREIL DE CUISSON ASSOCIE**
VERFAHREN ZUR STEUERUNG DER GARZEIT UND ZUGEHÖRIGES KOCHGERÄT
METHOD FOR CONTROLLING COOKING TIME AND ASSOCIATED COOKING APPLIANCE

(30) Priorité: 21.07.2015 FR 1556906
(43) Date de publication de la demande: 30.05.2018
(60) Demande divisionnaire: 21201962.4
(73) Titulaire: SEB S.A., 69130 Ecully (FR)
(72) Inventeur: DELRUE, Olivier, 21260 Selongey (FR); LETAIN, François, 21120 Marcilly-sur-Tille (FR); RETIF, François, 21000 Dijon (FR); PETIT, Michel, 21000 Dijon (FR); PETITALLOT, Johann, 21310 Arceau (FR)
(74) Mandataire: SEB Développement
(86) Numéro de dépôt international: PCT/FR2016/051801
(87) Numéro de publication internationale: WO 2017/013331

(56) Documents cités:
- FR-A1- 2 985 649
- FR-A3- 3 005 843

## Description

La présente invention concerne le domaine technique général des appareils de cuisson d'aliments.

La présente invention concerne plus particulièrement le domaine technique des appareils de cuisson prévus pour frire les aliments à partir d'une faible quantité de matière grasse. La présente invention concerne notamment, mais non exclusivement, les appareils domestiques.

Un appareil de cuisson du type précité est connu du document WO2006/000699 ou du document WO2006/000700. Cet appareil comporte une enceinte de cuisson associée à un dispositif de chauffage produisant un flux d'air chaud envoyé à l'intérieur de ladite enceinte de cuisson.

Un inconvénient de la construction de cet appareil réside toutefois dans le fait que les cuissons des différents aliments sont réalisées durant une durée définie par un utilisateur à l'aide d'un minuteur. L'utilisateur doit indiquer le temps de cuisson au moyen de touches - ou +. En règle générale le minuteur est intégré dans l'appareil et dans certains cas, un arrêt du dispositif de chauffage à partir du minuteur se produit une fois le temps de cuisson écoulé.

Le résultat est bien souvent que le temps de cuisson appliqué par l'utilisateur ne correspond pas exactement au temps nécessaire pour obtenir une cuisson parfaite des aliments ce qui a pour conséquence que les aliments peuvent être plus ou moins bien cuits et leurs qualités organoleptiques se trouvent dégradées. En outre lorsque le temps de chauffe n'est pas adapté, les moyens de chauffe peuvent être mis à contribution de manière inutile ce qui a pour effet de les détériorer plus rapidement.

Il est connu du document FR3005843 un appareil de cuisson utilisant une communication avec un terminal déporté et celui-ci peut envoyer des instructions de cuisson à l'appareil de cuisson. Ces instructions peuvent comprendre par exemple un temps de cuisson.

Un inconvénient d'un tel système est que le temps de cuisson est déjà défini dans le terminal déporté. Ceci impose à l'utilisateur de mettre la bonne quantité d'aliments et si celui-ci se trompe la cuisson des aliments se trouve détériorée. De la même manière si le temps de cuisson n'est pas adapté, l'appareil de cuisson peut fonctionner inutilement engendrant une usure précoce de certains éléments. En outre ce document n'envisage pas de brassage des aliments avec de la matière grasse.

Un objet de la présente invention est de proposer un procédé de commande d'un appareil de cuisson permettant d'obtenir un temps de cuisson optimisé et ceci quels que soit la quantité et le type d'aliments introduits dans l'enceinte de cuisson.

Un autre objet de la présente invention est de proposer un appareil de cuisson permettant de mettre en oeuvre le procédé énoncé ci-dessus et qui détermine un temps de cuisson optimisé quels que soit la quantité et le type d'aliments introduits dans l'enceinte de cuisson.

Ces objets sont atteints avec un procédé de commande d'un appareil de cuisson par un terminal de contrôle, l'appareil de cuisson comprenant :
- une interface de contrôle,
- un moyen de réception conçu pour contenir à la fois une certaine quantité d'aliments et de la matière grasse,
- un moyen de remuage des aliments contenus dans le moyen de réception,
le moyen de réception et le moyen de remuage étant conçus pour être mis en mouvement l'un par rapport à l'autre de façon à enduire automatiquement les aliments d'une pellicule de matière grasse par brassage des aliments avec la matière grasse au sein dudit moyen de réception et
- un moyen de chauffe principal qui est conçu pour générer un flux chauffant au-dessus du moyen de réception orienté de façon à frapper sensiblement au moins une partie des aliments,
caractérisé en ce que le procédé de commande comprend les étapes suivantes :
(E1) sélection sur le terminal d'une instruction de commande comprenant au moins une donnée relative à un type d'aliment sélectionné ;
(E2) transfert à l'interface de contrôle, selon un protocole de communication, de ladite instruction de commande comprenant au moins la donnée relative au type d'aliment sélectionné et démarrage de la cuisson ;
(E3) suivi de la température de l'appareil de cuisson par des mesures de températures, de manière à déterminer au bout d'un temps la quantité et la taille d'aliments introduits dans le moyen de réception, et de manière à calculer un temps de cuisson nécessaire à la cuisson de la quantité et la taille d'aliments introduits.

Ce procédé a pour effet qu'en introduisant une quantité arbitraire d'aliments et en renseignant uniquement le type d'aliment à cuire, on obtient un temps de cuisson optimisé pour la quantité et la taille d'aliments réellement introduits, ce qui a pour effet de conserver de bonnes qualités organoleptiques des aliments et d'utiliser l'appareil de cuisson pendant le juste temps nécessaire.

De façon avantageuse, l'étape (E3) de détermination de la quantité et de la taille d'aliments et du calcul du temps de cuisson comprend une étape (E3a) au cours de laquelle sont acquises au moins une mesure par au moins un capteur de température de la température du moyen de réception et détermination d'une valeur relative à la montée en température de l'appareil de cuisson.

Toujours dans l'étape (E3), l'étape (E3a) est suivie d'une étape (E3b) dans laquelle l'interface de contrôle indexe la valeur relative à la montée en température avec une base de données de manière à déterminer la masse et/ou la section des aliments introduits dans le moyen de réception. L'étape (E3b) est suivie d'une étape (E3c) au cours de laquelle l'appareil de cuisson détermine un temps de cuisson, nécessaire à la cuisson de la quantité d'aliments introduits, à partir des données de masse (M) et/ou de section (S) et de la donnée relative au type d'aliment introduit dans le moyen de réception.

Un des effets produit par ces étapes est qu'une détection de la quantité et la taille des aliments est effectuée à travers la mesure de la température, et ceci de manière dynamique car la quantité d'aliments dépendra directement de ces mesures. Le temps de cuisson sera alors optimisé selon la quantité d'aliments introduits.

De façon avantageuse, l'étape (E3) est suivie d'une étape (E4) dans laquelle l'interface de contrôle transfère au terminal un signal comprenant au moins la donnée du temps de cuisson.

Le transfert de la donnée de temps permet de rendre celle-ci accessible au terminal afin que celui-ci puisse l'exploiter.

De façon avantageuse, l'étape (E4) est suivie d'une étape (E5) au cours de laquelle le terminal affiche le temps de cuisson et indique lorsque celui ci est écoulé, notamment à l'aide d'un dispositif sonore ou d'un dispositif lumineux ou d'un dispositif vibratoire ou encore d'une combinaison de ces éléments.

L'affichage et l'indication selon lesquels celui-ci est écoulé permet de signaler à un utilisateur combien de temps va réellement durer la cuisson et lui indiquer lorsque la cuisson des aliments introduits dans le moyen de réception est finie.

De façon avantageuse, l'étape (E3) est suivie d'une étape (E3') au cours de laquelle l'appareil de cuisson détecte au moins un paramètre d'état de l'appareil notamment la tension d'alimentation de l'appareil de cuisson et/ou la température de départ de l'appareil de cuisson et/ou si l'appareil de cuisson est à vide ou non et le temps de cuisson est modifié de manière à obtenir un temps de cuisson corrigé selon les paramètres d'état.

Cette correction du temps de cuisson permet d'obtenir un temps de cuisson qui tient compte des paramètres d'état initiaux de l'appareil de cuisson qui peuvent influer sur le temps de cuisson. Ainsi le temps de cuisson corrigé est bien souvent différent du temps de cuisson initial car le temps de cuisson corrigé tient compte des paramètres d'état initiaux de l'appareil de cuisson.

Ces objets sont également atteints avec un produit programme d'ordinateur qui comprend des instructions de code qui sont agencées pour mettre en œuvre les étapes d'un procédé de commande exposé ci-dessus. Le programme est exécuté sur une unité de traitement d'une interface de contrôle d'un appareil de cuisson et sur une unité de traitement d'un terminal.

Ces objets sont également atteints avec un appareil de cuisson comprenant un terminal de contrôle et une interface de contrôle ayant en mémoire les instructions de code d'un produit programme d'ordinateur et agencé pour exécuter un tel produit programme d'ordinateur. De cette manière un appareil de cuisson permet de calculer le temps de cuisson optimisé à partir d'une certaine quantité d'aliments introduits dans le moyen de réception.

Selon un mode de réalisation, le terminal de contrôle est déporté de l'interface de contrôle et les deux communiquent selon un protocole de communication sans fil pouvant être du Bluetooth ^{®}, du wifi ou de la radio fréquence.

De cette manière un utilisateur peut accéder à l'information du temps de cuisson à partir de son terminal et ceci à distance de l'appareil de cuisson. En outre ces modes de communication sont largement répandus.

D'autres avantages et particularités de la présente invention apparaîtront dans la description des modes de réalisation donnés à titre d'exemple non limitatif et illustrés par les dessins mis en annexe où :
- La figure 1 est une vue en coupe d'un appareil de cuisson seul conforme à l'invention ;
- La figure 2 représente un système selon un premier mode de réalisation ;
- La figure 3 représente un système selon un deuxième mode de réalisation ;
- La figure 4 représente l'architecture électronique du système global ;
La figure 5 est un organigramme représentant les étapes du procédé conforme à l'invention ;
La figure 6 est un organigramme détaillant une des étapes du procédé de la figure 5.
Les figures 7 et 8 sont des organigrammes représentant des variantes du procédé de la figure 5.

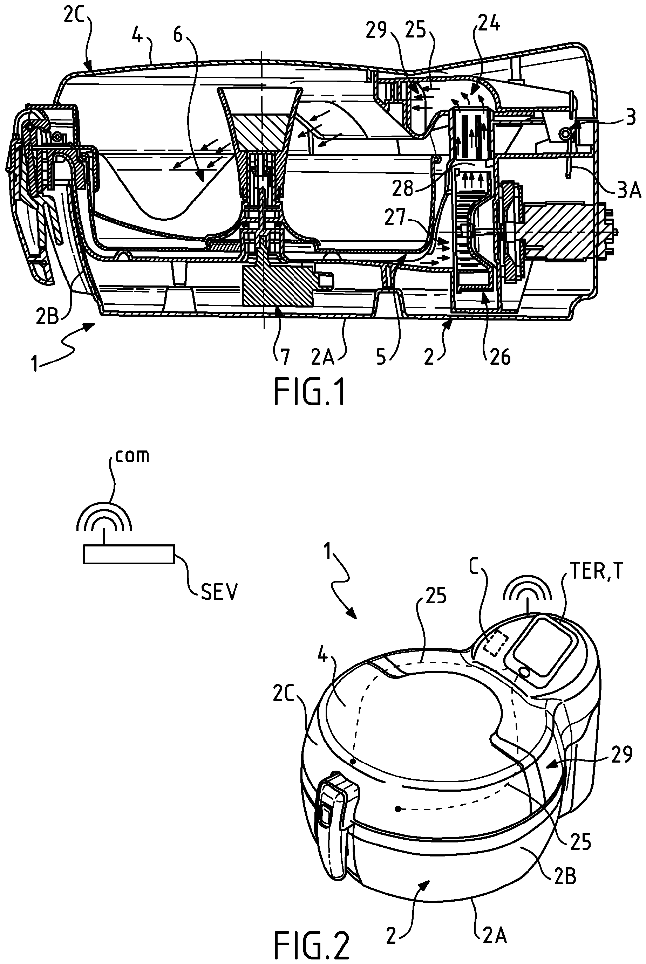

L'appareil de cuisson 1 illustré aux figures 1 à 3 est un appareil de cuisson 1 conçu et dimensionné pour un usage domestique. L'invention n'est cependant pas limitée au cadre familial, et pourra concerner également des appareils de cuisson comme des friteuses semi-professionnelles ou professionnelles.

L'appareil de cuisson domestique 1 illustré aux figures est préférentiellement conçu et dimensionné pour frire des aliments particulaires, tels que des morceaux de pommes de terre, en vue d'obtenir des frites. Ces morceaux de pommes de terre pourront avoir été coupés manuellement par l'utilisateur, ou avoir été achetés déjà préparés dans le commerce, à l'état frais ou surgelé. L'appareil de cuisson 1 conforme à l'invention n'est cependant pas limité à l'élaboration de pommes de terre frites, et peut être utilisée pour faire des fritures avec d'autres sortes d'aliments (viandes, poissons, légumes...) sans pour autant que l'on sorte du cadre de l'invention.

L'appareil de cuisson 1 est plus particulièrement appelé friteuse à cuisson sèche. Par " cuisson sèche ", on désigne ici un mode de cuisson d'aliments sans immersion de ces derniers dans un bain d'huile ou de matière grasse, que cette immersion soit partielle et/ou temporaire pendant le cycle de cuisson. L'expression " cuisson sèche " désigne au contraire une cuisson dans laquelle les aliments sont certes " mouillés " par un médium de cuisson (huile par exemple), mais sans pour autant être plongés ou baignés dans ledit médium. En cela, le principe de fonctionnement de l'appareil de cuisson 1 diffère de celui d'une friteuse classique à bain d'huile.

L'appareil de cuisson 1 comprend, de façon classique, un corps principal 2 destiné à accueillir en son sein des aliments à frire (non représentés).

Tel que cela est représenté aux figures 1 et 2, le corps principal 2 comprend une embase 2A, destinée à former le socle de l'appareil de cuisson 1, et conformée pour reposer de façon stable sur un plan ou un support.

A partir de l'embase 2A et à la périphérie de cette dernière s'élève une jupe latérale 2B, réalisée par exemple en un matériau métallique ou en un matériau plastique, et formant l'enveloppe externe de l'appareil de cuisson 1. La jupe latérale 2B peut présenter toutes formes géométriques appropriées et esthétiques.

Le corps principal 2 est muni d'un couvercle 2C monté mobile entre d'une part une position de fermeture (représentée à la Fig. 1), dans laquelle le couvercle 2C forme avec le corps principal 2 une enceinte sensiblement fermée autour des aliments à frire, et d'autre part une position d'ouverture (non représentée), autorisant l'introduction des aliments à frire au sein du corps principal 2. En d'autres termes, le couvercle 2C forme, en coopération avec la jupe latérale 2B et l'embase 2A, un boîtier clos, c'est-à-dire de préférence sensiblement hermétique, autorisant une cuisson en atmosphère fermée. La fermeture sensiblement étanche du corps principal 2 par le couvercle 2C peut être réalisée par exemple par l'intermédiaire de joints d'étanchéité (non représentés aux figures).

Tel que cela est représenté aux figures 1 et 2, le couvercle 2C est avantageusement monté sur le corps principal 2 par une liaison pivot élastique, réalisée par une charnière 3 munie d'un ressort de torsion 3A, de telle sorte que la position d'ouverture du couvercle 2C soit également une position de rappel.

Avantageusement, et tel que cela est représenté aux figures 1 et 2, le couvercle 2C pourra être pourvu d'une zone transparente de vision 4 permettant de surveiller l'évolution de la friture à l'intérieur de l'appareil pendant le cycle de cuisson, lorsque le couvercle 2C est fermé sur le corps principal 2.

Le principe de l'appareil de cuisson repose sur le principe d'une friture réalisée en recouvrant simplement la surface des aliments d'une mince couche d'huile ou de toute autre matière grasse alimentaire appropriée. Ainsi, la cuisson ne se fait pas dans un bain d'huile, lequel implique la présence d'une quantité importante de matière grasse entourant tout ou partie des aliments, mais bien grâce à une faible quantité d'huile formant un mince revêtement sensiblement homogène à la surface de chacun des aliments placés au sein du corps principal 2.

Ainsi que cela a été précisé précédemment, l'enduction de matière grasse est réalisée de manière automatique, c'est-à-dire sans nécessité d'une contribution essentielle et directe de l'utilisateur pour l'établissement de la pellicule de graisse à la surface des aliments. En d'autres termes, grâce à la présence, au sein du corps principal 2, d'un moyen pour enduire automatiquement les aliments d'une pellicule de matière grasse, l'utilisateur n'a qu'à se contenter d'introduire les aliments dans l'appareil de cuisson 1, au sein du corps principal 2, puis d'activer la mise en œuvre du moyen d'enduction automatique pour que l'appareil de cuisson 1 se charge elle-même directement, au sein du corps principal 2, d'enduire individuellement les aliments d'une fine couche de matière grasse, sans que l'utilisateur ne soit contraint de réaliser lui-même cette opération de façon manuelle.

A cet effet l'appareil de cuisson 1 comprend d'une part un moyen de réception 5 conçu pour contenir, de préférence directement, à la fois les aliments à frire et de la matière grasse, notamment lorsque cette dernière se présente sous forme liquide (huile ou graisse fondue), et d'autre part un moyen de remuage 6 des aliments contenus dans le moyen de réception 5.

Le moyen de réception 5 et le moyen de remuage 6 sont conçus pour être mis en mouvement l'un par rapport à l'autre, de façon à brasser et remuer les aliments et la matière grasse au sein du moyen de réception 5, afin de recouvrir sensiblement chaque aliment d'une pellicule sensiblement uniforme, homogène et continue de matière grasse.

Par exemple le moyen de remuage 6 est monté immobile en position relativement au corps principal 2, tandis que le moyen de réception 5 est d'une part monté à rotation relativement au corps principal 2 et au moyen de remuage 6, et d'autre part relié fonctionnellement à un moyen moteur 7 pour être entraîné en rotation par ce dernier.

Il est néanmoins tout à fait envisageable, sans pour autant sortir du cadre de l'invention, que l'appareil de cuisson 1 mette en oeuvre un moyen de remuage 6 monté mobile relativement au corps principal 2 et au moyen de réception 5, le moyen de réception 5 pouvant alors être monté immobile en position au sein du corps principal 2, ou être monté mobile au sein dudit corps principal 2. (Non représenté).

L'appareil de cuisson 1 comporte, monté sur le corps principal 2, un moyen de chauffe principal 24 conçu pour générer un flux chauffant 25, lequel est orienté de façon à frapper sensiblement directement ou non directement au moins une partie des aliments au sein du corps principal 2.

Par " moyen de chauffe principal ", on désigne un moyen de chauffe qui assure à lui seul au moins l'essentiel de l'apport thermique permettant la cuisson. De façon préférentielle, le moyen de chauffe principal 24 est conçu et agencé pour assurer la totalité dudit apport thermique.

Par flux chauffant, on désigne ici un faisceau thermique directionnel présentant un caractère dynamique contrôlé de façon positive, au contraire par exemple d'un simple effet de convection naturelle pouvant être obtenu par un chauffage purement statique.

Du fait que le flux chauffant 25 est dirigé pour venir s'exercer, sans médium intermédiaire (tel qu'un fond de récipient par exemple), sur les aliments présents dans le moyen de réception 5, cela contribue à un excellent échange thermique, et procure, en coopération avec la pellicule d'huile présente sur les aliments, une cuisson sensiblement équivalente à celle obtenue en bain d'huile mais sans les inconvénients de cette dernière.

Le flux chauffant 25 est un flux d'air chaud. L'invention n'est cependant pas limitée à un flux d'air chaud, et on pourrait envisager que le flux chauffant soit issu d'un chauffage à infrarouges par exemple.

Le moyen de chauffe principal 24 peut comprendre un ventilateur centrifuge 26 générant un flux aéraulique en aspirant de l'air au sein du corps principal 2 par au moins une ouïe d'entrée 27 et en refoulant cet air par au moins une ouïe de sortie 28 dans un dispositif de canalisation 29, lequel débouche en direction et au-dessus des aliments présents dans le corps principal 2.

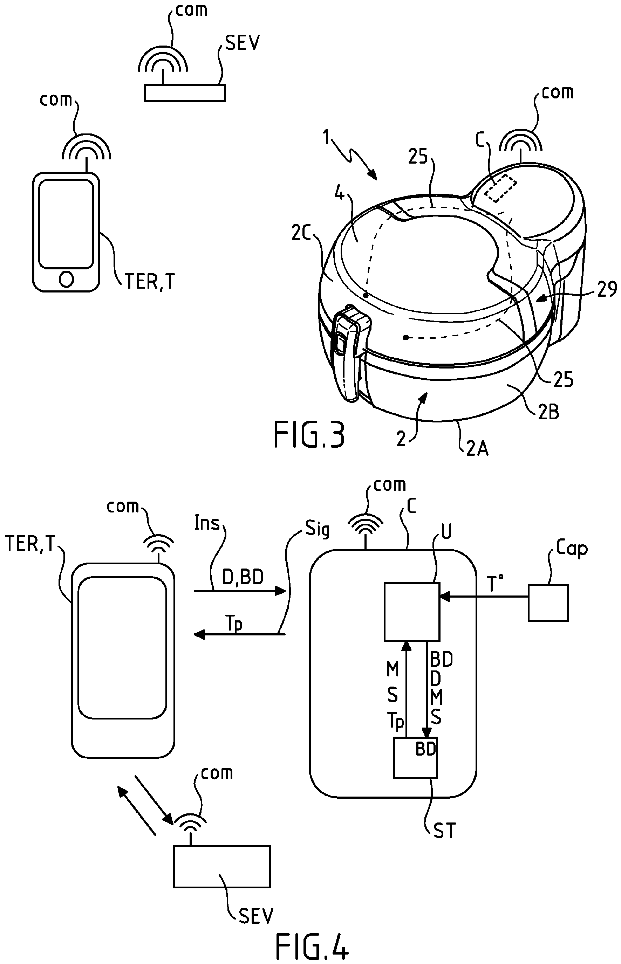

Comme visible aux figures 2 et 3, l'appareil de cuisson 1 comprend également un terminal (TER) et une interface de contrôle (C).

Le terminal (TER) est un dispositif électronique autonome qui comprend des capacités de stockage et de traitement de l'information ainsi que des capacités d'affichage. En outre il comprend une interface de commande qui permet à un utilisateur de rentrer des instructions de commande. Le terminal (TER) comprend également une unité de traitement (T) qui permet d'exécuter des instructions logicielles et de traiter des données ou de l'information.

A titre d'exemples non limitatifs, le dispositif électronique peut être un terminal (TER) dédié mais également un dispositif courant comme un téléphone, un Smartphone, une tablette ou un ordinateur.

Dans le cadre d'un premier mode de réalisation visible sur la figure 2, le terminal (TER) est intégré à l'appareil de cuisson 1. Par « intégré à l'appareil de cuisson » on entend que l'appareil de cuisson 1 comprend un emplacement dédié pour positionner le terminal (TER) afin que celui-ci ne bouge pas ou encore que le terminal (TER) est directement intégré à la fabrication dans l'appareil de cuisson 1, de telle manière qu'on ne puisse pas séparer l'un et l'autre sans une manipulation lourde de la part d'un utilisateur.

Dans ce mode de réalisation, l'invention peut également comprendre un serveur distant (SEV) dans lequel peuvent être stockés par exemple des recettes. Ce serveur distant (SEV) peut communiquer avec le terminal (TER) de manière filaire ou non filaire.

Dans le cadre du second mode de réalisation visible sur la figure 3, le terminal (TER) est déporté et n'est pas positionné sur l'appareil de cuisson 1.

La figure 4 illustre l'architecture de l'interface de contrôle (C) ainsi que le schéma de communication entre les différents éléments fonctionnels du système. L'interface de contrôle (C) est positionnée dans l'appareil de cuisson 1 et comprend une unité de traitement (U) qui permet d'exécuter des instructions logicielles et de traiter l'information. A titre d'exemple cette unité de traitement (U) est un microprocesseur. L'interface de contrôle (C) comprend en outre un dispositif de stockage (ST) d'information susceptible de stocker des informations ou des produits programmes d'ordinateur. L'information est stockée sous forme de base de données (BD) ou d'instructions de codes. Le terminal (TER) communique avec l'interface de contrôle (C) soit de manière sans fil soit de manière filaire. Dans le cas ou la communication se fait de manière sans fil, les informations échangées le sont via un protocole de communication qui peut être du Bluetooth ^{®}, du wifi ou de la radio fréquence.

Dans tous les cas, la communication est bidirectionnelle entre l'interface de contrôle (C) et le terminal (TER).

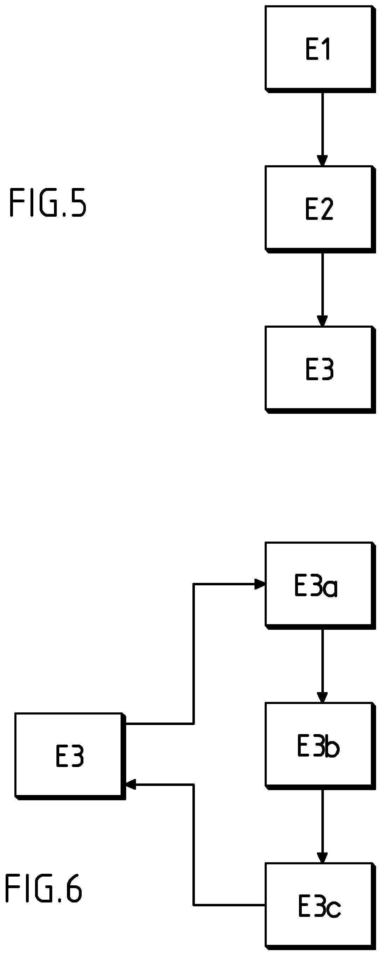

En lien avec les figures 4 et 5, la présente invention s'utilise et fonctionne de la manière suivante.

Tout d'abord l'utilisateur place dans le moyen de réception 5 une quantité désirée d'aliments, par exemple 1 kg de pommes de terre fraîches avec 14 ml d'huile, ou bien 750 g de pommes de terre surgelées précuites et met sous tension l'appareil de cuisson. Les aliments peuvent également être des viandes, du poisson ou tout autre aliment qui peut se cuire.

Vient ensuite une première étape (E1), qui consiste à sélectionner sur le terminal (TER) une instruction de commande (Ins). A titre d'exemple, la sélection peut consister à sélectionner sur l'écran du terminal (TER) une recette que souhaite réaliser un utilisateur. Cette recette est traduite par le terminal (TER) par une instruction de commande (Ins) et cette instruction de commande (Ins) comprend au moins une donnée (D) relative à un type d'aliment sélectionné. Si l'utilisateur choisit une recette à base de frites, l'instruction de commande (Ins) comprendra une donnée (D) qui identifiera que l'aliment est du type frite. Dans une étape ultérieure (E2), le terminal (TER) transfère à l'interface de contrôle (C) selon un protocole de communication (com) l'instruction de commande (Ins) qui peut comprendre en plus de la donnée (D), d'autres données relatives à des valeurs nécessaires pour la cuisson de l'aliment sélectionné. En règle générale ces valeurs se trouvent sous forme de base de données (BD) dans les capacités de stockages du terminal (TER). A la réception de l'instruction de commande (Ins) et donc de l'ensemble des données (D) et des valeurs de cuisson du ou des base de données (BD), la cuisson des aliments se met en marche soit automatiquement, soit manuellement par action de l'utilisateur sur le terminal (TER) ou sur l'interface de contrôle (C).

S'agissant du protocole de communication (com), celui-ci peut être un protocole que l'on retrouve dans des transmissions filaires ou dans des transmissions non filaires, c'est-à-dire sans fils.

Dans une étape ultérieure (E3), une fois la cuisson démarrée, l'interface de contrôle (C) détermine, au bout d'un certain temps, la quantité et la taille des aliments qui ont été introduits dans le moyen de réception 5 et l'appareil de cuisson 1 détermine le temps de cuisson (Tp) qui est nécessaire pour cuire le type d'aliments selon la quantité introduite. Le temps à partir duquel l'appareil de cuisson 1 détermine la quantité et la taille des aliments introduits est supérieur à 1 min à partir du démarrage de la cuisson, c'est-à-dire à partir du moment où les aliments commencent à cuire. Préférentiellement ce temps se situe à environ 2 minutes après le démarrage de la cuisson. De cette manière on a une détermination du temps de cuisson (Tp) qui est optimisée pour chaque type d'aliment car au bout d'au moins une minute la détermination du temps de cuisson (Tp) est plus fiable que par exemple une détermination au tout début de la cuisson.

De façon avantageuse, l'étape (E3) de détermination de la quantité et la taille d'aliments et du calcul du temps de cuisson (Tp) comprend plusieurs étapes de fonctionnement qui sont visibles sur les figures 4 et 6.

Elle comprend une étape (E3a) au cours de laquelle sont acquises, par au moins un capteur de température (Cap), au moins deux mesures de la température (T°) du moyen de réception 5 et donc des aliments introduits. Les mesures de température sont effectuées selon un incrément de temps qui est défini par l'interface de contrôle (C). Elles sont donc espacées d'une certaine durée dans le temps. Ces mesures sont remontées à l'unité de traitement (U) qui peut alors déterminer une montée en température de l'appareil de cuisson 1. Cette montée en températures est quantifiée par une valeur (V) qui correspond à la mesure de la pente de la montée en température. Autrement dit, l'unité de traitement (U) peut détecter la montée en température du moyen de réception et donc surtout des aliments. Dit encore autrement l'écart entre ces deux valeurs mesurées donne le comportement thermique des ingrédients introduits, ce comportement étant fonction de la quantité et de la taille des ingrédients.

Dans une étape ultérieure, (E3b), l'interface de contrôle (C) indexe la valeur (V) relative à la montée en température avec une base de données (BD) présente dans le dispositif de stockage (ST) de l'interface de contrôle (C). Ceci permet de faire correspondre à cette valeur (V) mesurée, une masse (M) et/ou une section (S) correspondant aux aliments introduits (et définis par la donnée (D)) dans le moyen de réception 5. Ces données de masse (M) et de section (S) sont ensuite récupérées par l'unité de traitement (U).

L'étape (E3b) est suivie d'une étape (E3c) au cours de laquelle l'interface de contrôle (C) indexe les données de masse (M) et/ou de section (S) à la base de données (BD) de manière à les faire correspondre à un temps de cuisson (Tp) en rapport avec le type d'aliment (D), la masse (M) et la section (S) des aliments introduits. Ceci permet alors au final d'obtenir le temps de cuisson (Tp) optimisé pour la quantité d'aliments introduits.

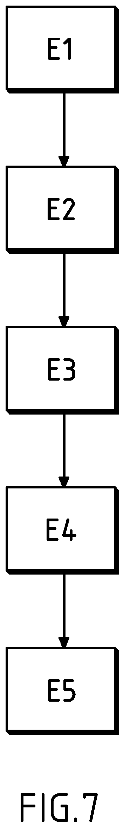

L'étape (E3) peut être suivie de différentes étapes comme cela est illustré sur la figure 7.

Ainsi l'étape (E3) peut être suivie d'une étape (E4) dans laquelle l'interface de contrôle (C) transfère au terminal (TER) un signal (Sig) comprenant au moins la donnée du temps (Tp) de cuisson.

De même l'étape (E3) peut être suivie directement d'une étape (E5) (non illustrée), qui elle-même peut suivre l'étape (E4) et au cours de laquelle le terminal (TER) affiche le temps de cuisson (Tp) et indique lorsque celui ci est écoulé, notamment à l'aide d'un dispositif sonore ou d'un dispositif lumineux ou d'un dispositif vibratoire ou d'une combinaison de ces éléments.

L'affichage et l'indication selon lesquels celui-ci est écoulé permettent de signaler à un utilisateur combien de temps va réellement durer la cuisson et lui indiquer lorsque la cuisson des aliments introduits dans le moyen de réception 5 est finie.

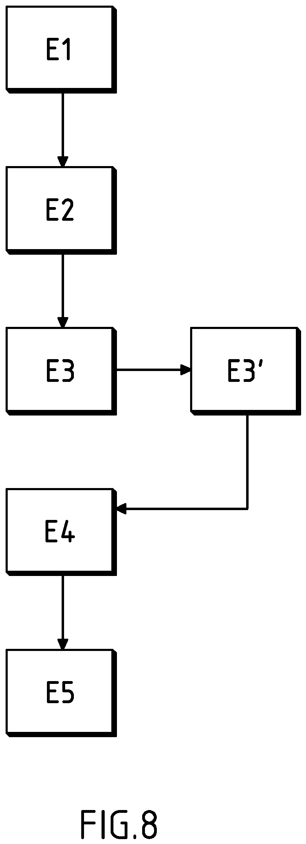

Enfin et comme cela est illustré sur la figure 8, le procédé de commande qui permet de calculer le temps de cuisson (Tp), peut comprendre une étape de correction du temps de cuisson (Tp).

Cette étape (E3') est illustrée sur la figure 8 et suit l'étape (E3) de la détermination du temps de cuisson (Tp).

Cette étape (E3') permet de corriger ce temps de cuisson (tp) en fonction de différents paramètres qui sont soit la tension d'alimentation de l'appareil de cuisson 1, soit que l'appareil de cuisson 1 est déjà chaud ou pas ou soit que l'appareil de cuisson 1 détecte qu'il est à vide ou pas.

Cette modification du temps de cuisson (Tp) permet donc d'obtenir un temps de cuisson corrigé qui tient compte des paramètres d'état initiaux de l'appareil de cuisson 1 et qui peuvent influer sur le temps de cuisson.

Par exemple la tension d'alimentation de l'appareil de cuisson 1 peut varier selon l'endroit où l'on se trouve. L'étape (E3') consiste notamment à comparer la valeur d'une tension d'alimentation mesurée chez un utilisateur avec une valeur de tension définie en sortie d'usine.

En comparant ces deux valeurs, l'interface de contrôle (C) est à même de corriger le temps de cuisson (Tp) en rajoutant ou en retranchant du temps de cuisson à celui déterminé auparavant en (E3).

Un autre paramètre pris en compte lors de l'étape (E3') est la température de départ de l'appareil de cuisson 1. Par exemple l'appareil de cuisson 1 peut démarrer à une température supérieure à 50°C (cuissons successives ou préchauffe du produit). Ceci influe sur le temps de cuisson (Tp) qui doit être corrigé.

Enfin pour de faibles quantités d'ingrédients, l'appareil de cuisson 1 peut se considérer « à vide ». Cela a pour effet d'abaisser la température de cuisson, par exemple à 140°C, et donc de modifier le résultat de cuisson. Il est donc essentiel de modifier le temps de cuisson (Tp) en fonction de ce cas. Donc lorsque l'appareil de cuisson 1 est dans ce cas, on ajoute du temps au temps de cuisson (Tp) calculé pour corriger la différence de température de cuisson. Ainsi pour une faible quantité d'aliments on ajoute par exemple 3 minutes au temps (Tp) déterminé à l'étape (E3).

La présente invention n'est nullement limitée aux exemples de réalisation décrits et leurs variantes, mais englobe de nombreuses modifications dans le cadre des revendications.

## Revendications

1. Procédé de commande d'un appareil de cuisson (1) par un terminal (TER) de contrôle, l'appareil de cuisson (1) comprenant
- une interface de contrôle (C),
- un moyen de réception (5) conçu pour contenir à la fois une certaine quantité d'aliments et de la matière grasse,
- un moyen de remuage (6) des aliments contenus dans le moyen de réception (5),
le moyen de réception (5) et le moyen de remuage (6) étant conçus pour être mis en mouvement l'un par rapport à l'autre de façon à enduire automatiquement les aliments d'une pellicule de matière grasse par brassage des aliments avec la matière grasse au sein dudit moyen de réception (5) et
- un moyen de chauffe principal (24) qui est conçu pour générer un flux chauffant au-dessus du moyen de réception (5) orienté de façon à frapper sensiblement au moins une partie des aliments,
**caractérisé en ce que** le procédé de commande comprend les étapes suivantes :
- (E1) sélection sur le terminal (TER) d'une instruction de commande (Ins) comprenant au moins une donnée (D) relative à un type d'aliment sélectionné ;
- (E2) transfert à l'interface de contrôle (C) selon un protocole de communication (com) de ladite instruction de commande (Ins) comprenant au moins la donnée (D) relative au type d'aliment sélectionné et démarrage de la cuisson ;
- (E3) suivi de la température de l'appareil de cuisson (1) par des mesures de températures de manière à déterminer au bout d'un temps la quantité et la taille d'aliments introduits dans le moyen de réception (5), et de manière à calculer un temps de cuisson (Tp) nécessaire à la cuisson de la quantité et la taille d'aliments introduits.

2. Procédé de commande d'un appareil de cuisson par un terminal (TER) selon la revendication 1 **caractérisé en ce que** l'étape (E3) comprend les étapes suivantes :
- (E3a) mesures par au moins un capteur de température (Cap) de la température du moyen de réception (5) et détermination d'une valeur (V) relative à la montée en température de l'appareil de cuisson 1 ;
- (E3b) indexation par l'interface de contrôle (C) de la valeur (V) déterminée avec une base de données (BD) de manière à déterminer la masse (M) et/ou la section (S) des aliments introduits dans le moyen de réception (5) ;
- (E3c) détermination par l'appareil de cuisson (1) du temps (Tp), nécessaire à la cuisson de la quantité d'aliments introduits, à partir des données de masse (M) et/ou de section (S) et de la donnée (D) relative au type d'aliment introduit dans le moyen de réception (5).

3. Procédé de commande d'un appareil de cuisson (1) par un terminal (TER) selon la revendication 1 ou 2 **caractérisé en ce que** l'étape (E3) est suivie d'une étape (E4) dans laquelle l'interface de contrôle (C) transfère au terminal (TER) un signal (Sig) comprenant au moins la donnée du temps (Tp) de cuisson.

4. Procédé de commande d'un appareil de cuisson (1) par un terminal (TER) selon la revendication 3 **caractérisé en ce que** l'étape (E4) est suivie d'une étape (E5) au cours de laquelle le terminal (TER) affiche le temps (Tp) de cuisson et indique lorsque celui ci est écoulé, notamment à l'aide d'un dispositif sonore ou d'un dispositif lumineux ou d'un dispositif vibratoire ou d'une combinaison de ces éléments.

5. Procédé de commande d'un appareil de cuisson (1) par un terminal (TER) selon l'une des revendications 1 à 4 **caractérisé en ce que** l'étape (E3) est suivi d'une étape (E3') au cours de laquelle l'appareil de cuisson (1) détecte au moins un paramètre d'état de l'appareil de cuisson (1) notamment la tension d'alimentation de l'appareil de cuisson (1) et/ou la température de départ de l'appareil de cuisson (1) et/ou si l'appareil de cuisson (1) est à vide ou non et le temps de cuisson (Tp) est modifié de manière à obtenir un temps de cuisson corrigé selon les paramètres d'état détectés en (E3').

6. Produit programme d'ordinateur comprenant des instructions de code agencées pour mettre en œuvre les étapes d'un procédé selon l'une des revendications 1 à 5, lorsque ledit programme est exécuté sur une unité de traitement (U) d'une interface de contrôle (C) d'un appareil de cuisson (1) et sur une unité de traitement (T) d'un terminal (TER).

7. Appareil de cuisson (1) comprenant un terminal (TER) de contrôle et une interface de contrôle (C) ayant en mémoire les instructions de code d'un produit programme d'ordinateur selon la revendication précédente et agencé pour exécuter un tel produit programme d'ordinateur.

8. Appareil de cuisson (1) selon la revendication précédente **caractérisé en ce que** le terminal (TER) est déporté de l'interface de contrôle (C) et communique de manière sans fil avec l'interface de contrôle (C) selon un protocole de communication (com) sans fil comme notamment du Bluetooth ^{®}, du Wifi ou de la radio fréquence.

## Patentansprüche

1. Verfahren zur Steuerung eines Gargeräts (1) durch ein Steuerterminal (TER), wobei das Gargerät (1) Folgendes umfasst:
- eine Steuerschnittstelle (C),
- eine Aufnahmeeinrichtung (5), die dazu ausgelegt ist, gleichzeitig eine bestimmte Menge an Nahrungsmitteln und Fett aufzunehmen,
- eine Einrichtung (6) zum Rühren der in der Aufnahmeeinrichtung (5) enthaltenen Nahrungsmittel,
wobei die Aufnahmeeinrichtung (5) und die Rühreinrichtung (6) dazu ausgelegt sind, relativ zueinander so bewegbar zu sein, dass die Nahrungsmittel automatisch mit einem Fettfilm beschichtet werden, indem die Nahrungsmittel mit dem Fett in der Aufnahmeeinrichtung (5) gerührt werden, und
- eine Hauptheizeinrichtung (24), die dazu ausgelegt ist, einen Heizfluss über der Aufnahmeeinrichtung (5) zu erzeugen, der so ausgerichtet ist, dass er im Wesentlichen zumindest auf einen Teil der Nahrungsmittel auftrifft,
**dadurch gekennzeichnet, dass** das Steuerverfahren die folgenden Schritte umfasst:
- (E1) am Terminal (TER) die Auswahl einer Steueranweisung (Ins), die mindestens eine Angabe (D) bezüglich eines ausgewählten Nahrungsmitteltyps umfasst;
- (E2) die Übertragung der Steueranweisung (Ins), die zumindest die Angabe (D) bezüglich eines ausgewählten Nahrungsmitteltyps umfasst, gemäß einem Kommunikationsprotokoll (com) an die Steuerschnittstelle (C) und den Beginn des Garens;
- (E3) das Überwachen der Temperatur des Gargeräts (1) durch Temperaturmessungen, um nach einem Zeitraum die Menge und die Größe von in die Aufnahmeeinrichtung (5) eingeführten Nahrungsmitteln zu bestimmen und um eine Garzeit (Tp) zu bestimmen, die für das Garen der Menge und der Größe der eingeführten Nahrungsmittel erforderlich ist.

2. Verfahren zur Steuerung eines Gargeräts durch ein Terminal (TER) nach Anspruch 1, **dadurch gekennzeichnet, dass** Schritt (E3) die folgenden Schritte umfasst:
- (E3a) Messungen der Temperatur der Aufnahmeeinrichtung (5) durch mindestens einen Temperatursensor (Cap) und die Bestimmung eines Wertes (V) bezüglich einer Temperaturerhöhung des Gargeräts 1;
- (E3b) mittels der Steuerschnittstelle (C) die Indizierung des bestimmten Wertes (V) mit einer Datenbank (BD), um die Masse (M) und/oder den Querschnitt (S) der in die Aufnahmeeinrichtung (5) eingeführten Nahrungsmittel zu bestimmen;
- (E3c) mittels des Gargeräts (1) die Bestimmung der Zeit (Tp), die zum Garen der eingeführten Nahrungsmittelmenge erforderlich ist, aus Angaben der Masse (M) und/oder des Querschnitts (S) und der Angabe (D) bezüglich des in die Aufnahmeeinrichtung (5) eingeführten Nahrungsmitteltyps.

3. Verfahren zur Steuerung eines Gargeräts (1) durch ein Terminal (TER) nach Anspruch 1 oder 2, **dadurch gekennzeichnet, dass** Schritt (E3) von einem Schritt (E4) gefolgt wird, in dem die Steuerschnittstelle (C) ein Signal (Sig), dass zumindest die Angabe der Garzeit (Tp) umfasst, zum Terminal (TER) überträgt.

4. Verfahren zur Steuerung eines Gargeräts (1) durch ein Terminal (TER) nach Anspruch 3, **dadurch gekennzeichnet, dass** Schritt (E4) von einem Schritt (E5) gefolgt wird, in dem das Terminal (TER) die Garzeit (Tp) anzeigt und insbesondere mittels einer akustischen Vorrichtung oder einer Leuchtvorrichtung oder einer Vibrationsvorrichtung oder einer Kombination dieser Elemente angibt, wenn diese abgelaufen ist.

5. Verfahren zur Steuerung eines Gargeräts (1) durch ein Terminal (TER) nach einem der Ansprüche 1 bis 4, **dadurch gekennzeichnet, dass** Schritt (E3) von einem Schritt (E3') gefolgt wird, in dem das Gargerät (1) mindestens einen Zustandsparameter des Gargeräts (1), insbesondere die Betriebsspannung des Gargeräts (1) und/oder die Anfangstemperatur des Gargeräts (1) erfasst, und/oder, ob das Gargerät (1) leer ist oder nicht, und die Garzeit (Tp) geändert wird, um eine gemäß den in (E3') erfassten Zustandsparametern korrigierte Garzeit zu erhalten.

6. Computerprogrammprodukt, dass die Codeanweisungen umfasst, die so ausgebildet sind, dass die Schritte eines Verfahrens nach einem der Ansprüche 1 bis 5 durchgeführt werden, wenn das Programm auf einer Verarbeitungseinheit (U) einer Steuerschnittstelle (C) eines Gargeräts (1) und auf einer Verarbeitungseinheit (T) eines Terminals (TER) ausgeführt wird.

7. Gargerät (1), dass ein Steuerterminal (TER) und eine Steuerschnittstelle (C) umfasst, in dem die Codeanweisungen eines Computerprogrammprodukts nach dem vorstehenden Anspruch gespeichert sind und das so ausgebildet ist, dass es ein solches Computerprogrammprodukt ausführt.

8. Gargerät (1) nach dem vorstehenden Anspruch, **dadurch gekennzeichnet, dass** das Terminal (Ter) von der Steuerschnittstelle (C) entfernt ist und gemäß einem Drahtlos-Kommunikationsprotokoll (com), wie insbesondere Bluetooth^{®}, WLAN oder einer Funkfrequenz, mit der Steuerschnittstelle (C) drahtlos kommuniziert.

## Claims

1. Method for controlling a cooking appliance (1) by a control terminal (TER), the cooking appliance (1) comprising
- a control interface (C),
- a receiving means (5) designed to contain both a certain quantity of food and fat,
- a means for shaking (6) the food contained in the receiving means (5),
the receiving means (5) and the shaking means (6) being designed to be moved against one another so as to automatically coat the food with a film of fat by stirring the food with the fat within said receiving means (5) and
- a main heating means (24) which is designed to generate a heating flow above the receiving means (5) oriented so as to substantially hit at least some of the food,
**characterised in that** the control method comprises the following steps:
- (E1) selecting on the terminal (TER) a control instruction (Ins) comprising at least one datum (D) relative to a type of food selected;
- (E2) transferring to the control interface (C) according to the communication protocol (com) of said control instruction (Ins) comprising at least the datum (D) relative to the type of food selected and starting the cooking;
- (E3) monitoring the temperature of the cooking appliance (1) by temperature measurements so as to determine at the end of a time, the quantity and size of food introduced in the receiving means (5), so as to calculate a cooking time (Tp) necessary for cooking the quantity and the size of food introduced.

2. Method for controlling a cooking appliance by a terminal (TER) according to claim 1, **characterised in that** the step (E3) comprises the following steps:
- (E3a) measuring by at least one temperature sensor (Cap), the temperature of the receiving means (5) and determining a value (V) relative to the increase in temperature of the cooking appliance 1;
- (E3b) indexing by the control interface (C), the value (V) determined with a database (BD) so as to determine the mass (M) and or the section (S) of the food introduced in the receiving means (5);
- (E3c) determining by the cooking appliance (1), the time (Tp), necessary for cooking the quantity of food introduced, from the mass (M) and/or section (S) data and from the datum (D) relative to the type of food introduced in the receiving means (5).

3. Method for controlling a cooking appliance (1) by a terminal (TER) according to claim 1 or 2, **characterised in that** step (E3) is followed by a step (E4), wherein the control interface (C) transfers to the terminal (TER), a signal (Sig) comprising at least the data of the cooking time (Tp).

4. Method for controlling a cooking appliance (1) by a terminal (TER) according to claim 3, **characterised in that** step (E4) is followed by a step (E5) during which the terminal (TER) displays the cooking time (Tp) and indicates when this has elapsed, in particular using a sound device or a light device or a vibrating device or a combination of these elements.

5. Method for controlling a cooking appliance (1) by a terminal (TER) according to one of claims 1 to 4, **characterised in that** step (E3) is followed by a step (E3') during which the cooking appliance (1) detects at least one state parameter of the cooking appliance (1), in particular the supply voltage of the cooking appliance (1) and/or the starting temperature of the cooking appliance (1) and/or if the cooking appliance (1) is empty or not, and the cooking time (Tp) is modified so as to obtain a cooking time corrected according to the state parameters detected in (E3').

6. Computer program product comprising code instructions arranged to implement the steps of a method according to one of claims 1 to 5, when said program is executed on a processing unit(U) of a control interface (C) of a cooking appliance (1) and on a processing unit (T) of a terminal (TER).

7. Cooking appliance (1) comprising a control terminal (TER) and a control interface (C) having, in memory, the code instructions of a computer program product according to the preceding claim and arranged to execute such a computer program product.

8. Cooking appliance (1) according to the preceding claim, **characterised in that** the terminal (TER) is moved from the control interface (C) and wirelessly communicates with the control interface (C) according to a wireless communication protocol (com), like in particular, Bluetooth^{®}, wi-fi or radio frequency.
